# EUROPÄISCHE PATENTANMELDUNG

(11) **EP 1 559 612 A1**
(43) Veröffentlichungstag der Anmeldung: **03.08.2005**
(21) Anmeldenummer: 04030551.8
(22) Anmeldetag: 23.12.2004
(51) Int. Cl.: B60P 3/055, B60P 1/64

(54) **Fahrzeuganordnung mit verlagerbarem Warenträger**

(30) Priorität: 29.01.2004 DE 102004004346
(71) Anmelder: Leikeim, Volker H., 96224 Burgkunstadt (DE)
(72) Erfinder: Leikeim, Volker H., 96224 Burgkunstadt (DE)
(74) Vertreter: Weber, Gerhard, Dipl.-Phys.

(57) **Zusammenfassung**

Fahrzeuganordnung mit wenigstens einem Warenträger, welcher seitlich und in der Höhe zwischen einer Transportposition in einem Laderaum und einer Entladeposition mittels einer Verschiebevorrichtung verlagerbar ist, werden vorteilhafte Ausführungen, insbesondere mit teilweise innerhalb der Laderaumbreite liegender Entladeposition und/oder im wesentlichen getrennter seitlicher und vertikaler Verlagerung mittels separater Kraftübertragungsmittel beschrieben.

## Beschreibung

Die Erfindung betrifft eine Fahrzeuganordnung mit einem verlagerbaren Warenträger.

Für die Auslieferung von Waren, insbesondere Getränken, mit zumindest teilweiser manueller Entladung an Zielorten, sind zur Erleichterung der Entladevorgänge für das ausliefernde Personal verschiedene Konstruktionen vorgeschlagen.

Eine verbreitete Bauform für Fahrzeuganordnungen sieht eine heckseitige Laderampe vor, welche hydraulisch zwischen einer unteren Position auf der Standfläche des Fahrzeugs und einer oberen Position auf Höhe der Ladefläche verschiebbar ist und aus der oberen Position zusätzlich n ach oben verschwenkt werden kann und dann den Laderaum nach hinten abschließt. Dieses Konstruktionsprinzip findet sich auch wieder in entlang der Längsseiten von Laderäumen angeordneten Ladebordwänden zur seitlichen Entladung.

Bei einer aus der FR 2 179 890 A1 bekannten Anordnung ist der Boden des Laderaums gegen die Längsträgeranordnung des Fahrzeugrahmens abgesenkt angeordnet und der Laderaum in zwei Teilhälften seitlich eines die Längsträgeranordnung bildenden zentralen Rahmenrohrs unterteilt. Der Boden kann dabei gegen die Horizontale geneigt verlaufen. Die FR 2 263 925 A1 beschreibt für einen derart geteilten Laderaum die zusätzliche Möglichkeit, die Ladeböden einzeln bis auf die Standfläche des Fahrzeugs abzusenken und dann auch parallel zur Standfläche auszurichten.

Absenkbare Ladeböden als Teil von Ladeflächen des Laderaums sind auch aus DE 94 08 263 U1 bekannt, wo ein in seitlicher Richtung relativ schmaler Teil der Ladefläche als Boden eines vertikal verschiebbaren Warenkäfigs ausgebildet ist, oder aus DE 8 234 715 U1, wo zur Erzielung großer seitlicher Breite des absenkbaren Ladebodens ein Fahrzeug mit einem zentralen Rohr als Längsträgeranordnung ausgestattet ist.

Darüber hinaus ist es bekannt, mittels Maschinenkraft betriebener Vorrichtungen Warenträger samt Waren aus dem Laderaum zu entnehmen und seitlich vom Fahrzeug auf den Boden abzusetzen. In der EP 0983899 B1 ist hierfür ein Fahrzeugaufbau vorgesehen, bei welchem eine kranartige Vertikalbewegungsvorrichtung über eine Lastgabel einen Warenträger, z. B. eine vollständige Ladepalette anhebt und mittels seitlich über die Laderaumbreite ausfahrbare Laufschienen in eine Position außerhalb des Laderaums verfährt und dort auf dem Boden absenkt. Aus der DE 298 07 108 U1 ist eine Vorrichtung bekannt, bei welcher mittels einer Schwenkhebelanordnung ein Warenträger von seiner Position im Laderaum nach seitlich außerhalb des Laderaums und nach unten bis zur Standfläche des Fahrzeugs verschwenkt werden kann. Die DE 32 33 159 A1 beschreibt einen einachsigen Anhänger mit einer hydraulischen Schwenkvorrichtung, welche einen Palettenträger nach hinten verschwenkt und zwischen die seitlichen Rahmenschenkel eines Fahrzeugrahmens in Form einer nach hinten offenen U-Form absenkt.

Ferner sind Sonderkonstruktionen von Fahrzeugen bekannt, bei welchen Vorder- und Hinterachse nicht durch gerade horizontal durchgehende Längsträger verbunden sind, sondern eine aufwendige selbsttragende Konstruktion mit zwischen Vorder- und Hinterachse abgesenktem Rahmenabschnitt gegeben ist, wie z. B. in DE 199 24 889 A oder US 3 190 473.

Der vorliegenden Erfindung liegt die Aufgabe zugrunde, eine vorteilhafte Fahrzeuganordnung zur erleichterten Entladung anzugeben.

Die Erfindung ist im Patentanspruch 1 beschrieben. Die abhängigen Ansprüche enthalten vorteilhafte Ausgestaltungen und Weiterbildungen der Erfindung.

Die Positionierung des Warenträgers in einer seitlich gegen die höhere Transportposition im Laderaum seitlich versetzten, aber teilweise innerhalb der Laderaumbreite liegenden unteren Entladeposition ermöglicht bei der vorteilhaften Verwendung von Ladeträgern, welche sich annähernd über die halbe Laderaumbreite in Querrichtung erstrecken, die Entladung in abgesenkter Position mit verringertem Platzbedarf seitlich des Fahrzeugs, was an vielen Zielorten für die seitliche Entladung von wesentlichem Vorteil ist. Die große Ladetiefe in Querrichtung erlaubt die im wesentlichen vollständige Ausnutzung der Laderaumbreite ohne Umschichtung von Waren innerhalb des Laderaums und insbesondere die Warenzusammenstellung am Lager auf Standardpaletten und deren Verladung in dem Laderaum, z. B. mittels Gabelstaplern. Die Laderaumbreite ist dabei typischerweise gleich der Fahrzeugbreite und der Breite der Hinterradanordnung.

Die Breite des Warenträgers in Querrichtung beträgt vorteilhafterweise wenigstens 40 %, insbesondere wenigstens 45 % der Laderaumbreite. Die Breite des Warenträgers beträgt günstigerweise wenigstens 120 cm, so dass eine Standardpalette mit Maßen 80 cm x 120 cm vollständig mit ihrem Längsmaß in Querrichtung auf dem Warenträger ohne Überstand abgestellt werden kann. Vorteilhafterweise sind Warenträger beiderseits der Fahrzeugmittellängsachse vorgesehen, welche nach entgegengesetzten Seiten des Fahrzeugs verlagert werden können.

In Längsrichtung des Fahrzeugs liegt der verlagerbare Warenträger vorzugsweise im Bereich zwischen den Hinterrädern des Fahrzeugs und der Vorderwand des Laderaums. Der Warenträger ist dabei vorzugsweise einstückig durchgehend, kann aber auch in mehrere Teilträger unterteilt sein. Ein weiterer derartiger Warenträger kann hinter den Hinterrädern vorgesehen sein.

In der tieferen Entladeposition liegt der Warenträger vorteilhafterweise wenigstens 30 cm, vorzugsweise wenigstens 40 cm, insbesondere wenigstens 50 cm in Querrichtung des Fahrzeugs innerhalb der Laderaumbreite. Zusätzlich zu dem verringerten Platzbedarf seitlich des Fahrzeugs in der Entladeposition ergibt sich der Vorteil, dass die Verschiebevorrichtung zur Verlagerung des Warenträgers einfacher ausgeführt sein kann und dass beim Verlagern des Warenträgers in Zwischenpositionen auf das Fahrzeug wirkende Kippmomente geringer sind, so dass in bevorzugter Ausführung auf seitliche Bodenabstützungen ganz verzichtet werden kann.

Der Warenträger kann in vielerlei Ausführungen gestaltet sein. Er weist vorteilhafterweise einen Boden auf, auf welchen sowohl Paletten als auch kleinere Wareneinheiten, wie Getränkekisten abstellbar sind. Der Boden kann vorteilhafterweise in gewichtssparender Ausführung eine Gitterkonstruktion aufweisen. Zur Einhängung in die Verschiebevorrichtung kann ein den Boden haltender und an sich bekannte Haltemittel aufweisender Rahmen des Warenträgers vorgesehen sein. Der Warenträger kann mehrseitig Ladegutsicherungseinrichtungen, beispielsweise Gitterwände aufweisen.

Eine vorteilhafte Verschiebevorrichtung zur Verlagerung eines Warenträgers einschließlich darauf befindlicher Waren von einer höheren Transportposition im Laderaum eines Fahrzeugs in eine tiefere, seitlich nach außen versetzte Entladeposition enthält erste und zweite Kraftübertragungsmittel und bewirkt die Höhenverschiebung zwischen der Entladeposition und der Transportposition zumindest überwiegend als eine Vertikalverschiebung unter Einsatz der ersten Kraftübertragungsmittel und die seitliche Verschiebung zumindest überwiegend als eine Schwenkbewegung einer Schwenkhebelanordnung mittels der zweiten Kraftübertragungsmittel. Die Aufteilung der gesamten Verschiebung zwischen Transportposition und Entladeposition in eine Vertikalverschiebung und eine seitliche Schwenkbewegung führt zu besonders günstigen Kraftverhältnissen innerhalb der Verschiebevorrichtung. Vertikalverschiebung und Schwenkbewegung erfolgen vorteilhafterweise zeitlich nacheinander. Die bei der Schwenkbewegung um eine horizontale Schwenkgelenkachse der Schwenkhebelanordnung zwangsläufig auftretende Höhenänderung der Einhängeposition des Warenträgers an der Schwenkhebelanordnung sei dabei nicht unter der Vertikalverschiebung verstanden und klein gegenüber deren Höhenänderung.

Die Vertikalverschiebung erfolgt vorteilhafterweise als im wesentlichen lineare Bewegung, wobei günstigerweise eine Zwangsführung des Warenträgers zur Beibehaltung dessen aufrechter Ausrichtung vorgesehen sein kann. Die für die Vertikalverschiebung eingesetzten Kraftübertragungsmittel können in erster vorteilhafter Ausführung Zugelemente wie Seile oder Ketten als kraftübertragende Elemente vorgesehen. Die Zugelemente können dabei gegebenenfalls mehrfach umgelenkt geführt sein. Bevorzugt erfolgt eine Absenkung des Warenträgers bei der Vertikalverschiebung allein unter der Einwirkung des Gewichts von Warenträger und Waren und die Zugelemente sind nur in einer Richtung zum kontrollierten Abbremsen des Warenträgers beim Absenken und zum Anheben des Warenträgers beansprucht. Der Antrieb der Zugelemente erfolgt vorteilhafterweise über selbsthemmende Getriebemittel, insbesondere Gewindetriebe oder Schneckentriebe. In anderer vorteilhafter Ausführung enthalten die ersten Kraftübertragungsmittel druckmittelbetätigbare Bauelemente, insbesondere pneumatische oder vorzugsweise hydraulische Linearzylinder. In vorteilhafter Ausführung kann ein solcher Linearzylinder zugleich einen Schwenkhebel der Schwenkhebelanordnung bilden.

Die Schwenkbewegung um eine Schwenkgelenkachse der Schwenkhebelanordnung erfolgt mittels der zweiten Kraftübertragungsmittel, welch ein vorteilhafter Ausführung druckmittelbetätigbare Bauelemente, vorzugsweise Linearzylinder enthalten können. In anderer vorteilhafter Ausführung können die zweiten Kraftübertragungsmittel insbesondere auch starre, auf Zug und Druck beanspruchbare Elemente oder bidirektional antreibbare Zugelemente oder Kombinationen unterschiedlicher kraftübertragender Elemente enthalten. Die zweiten Kraftübertragungsmittel greifen zur Krafteinleitung vorteilhafterweise an einem von der Schwenkgelenkachse beabstandeten Punkt der Schwenkhebelanordnung an. Die Schwenkhebelanordnung ist vorteilhafterweise an der Höhe im Bereich des Fahrzeugrahmens, z. B. an Querträgeranordnungen, abgestützt.

Der Abstand der Einhängung des Warenträgers in der Schwenkhebelanordnung von der Schwenkgelenkachse während der Schwenkbewegung ist vorteilhafterweise wenigstens gleich der halben Laderaumbreite. Der Schwenkwinkel der Schwenkbewegung um die Schwenkgelenkachse beträgt vorteilhafterweise weniger als 45°, insbesondere weniger als 30°. Vorzugsweise liegt die Einhängung des Warenträgers in die Schwenkhebelanordnung in der Transportposition gegen die Schwenkgelenkachse zur Fahrzeugmitte hin versetzt. Der Schwenkweg bzw. Schwenkwinkel der Schwenkhebelanordnung liegt vorteilhafterweise zu wenigstens 30 %, vorzugsweise zu wenigstens 50 %, insbesondere zu wenigstens 80 % zwischen Scheitelpunkt der Schwenkbewegung und Fahrzeugmitte. In besonders vorteilhafter Ausführung, insbesondere bei Einsatz eines druckmittelbetätigten Linearzylinders für die Vertikalverschiebung liegt der Schwenkweg vorzugsweise seitlich vollständig im Bereich zwischen Schwenkgelenkachse und Fahrzeugmitte.

Die Erfindung ist nachfolgend anhand bevorzugter Ausführungsbeispiele unter Bezugnahme auf die Abbildungen noch eingehend veranschaulicht. Dabei zeigt:
- Fig. 1: eine Längsansicht einer Fahrzeuganordnung,
- Fig. 2: eine Längsansicht mit bevorzugtem Verschiebungsverlauf,
- Fig. 3: eine erste Ausführung einer Verschiebeanordnung,
- Fig. 4: eine weitere Ausführung einer Verschiebeanordnung,
- Fig. 5: eine Anordnung mit gestütztem Hubzylinder,
- Fig. 6: eine Anordnung mit getrennten Schwenkachsen eines Hubzylinders und eines Tragarms,
- Fig. 7: eine Längsansicht einer Anordnung mit seitlich verschiebbarer Hubanordnung,
- Fig. 8: eine Seitenansicht eines Fahrzeugs in Transportposition,
- Fig. 9: das Fahrzeug nach Fig. 8 in Entladeposition,
- Fig. 10: eine bevorzugte Anordnung in verschiedenen Positionen.

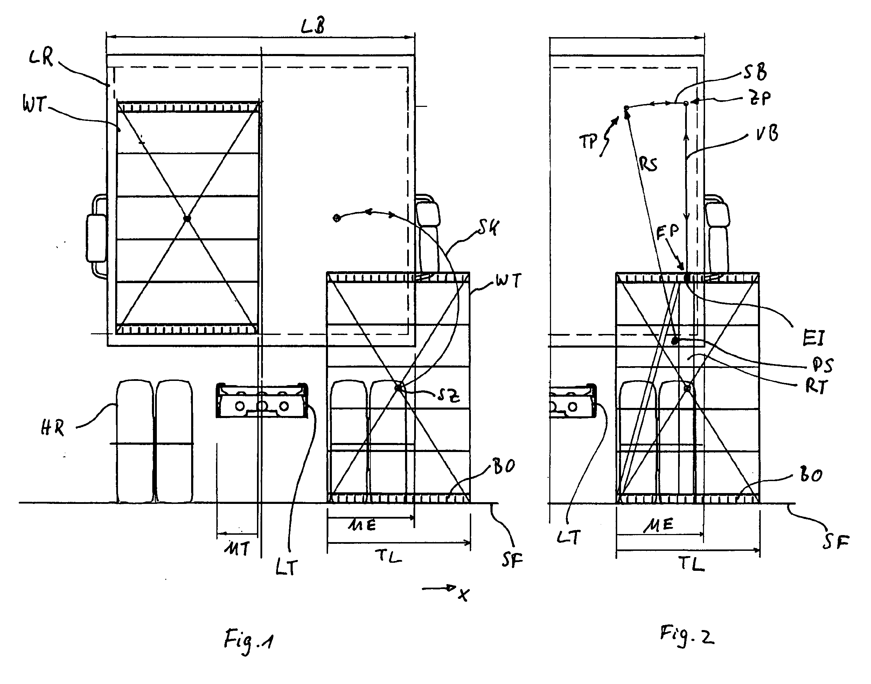

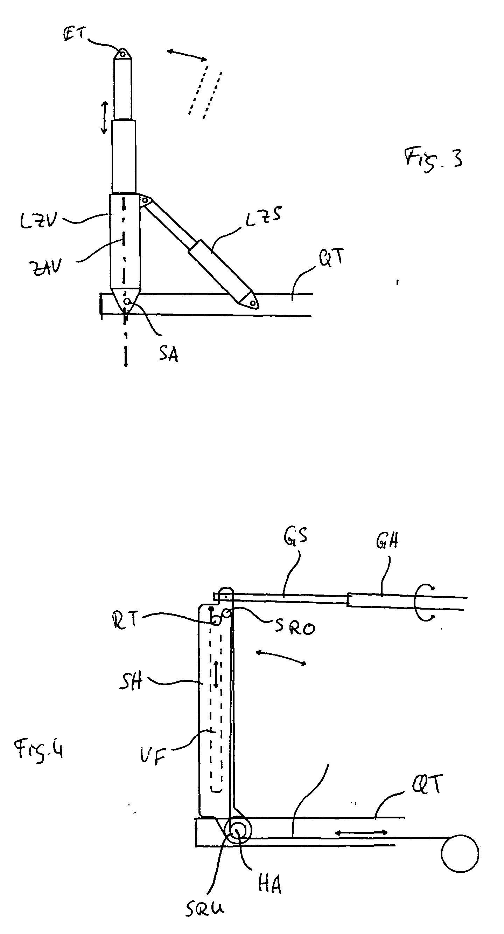

In Fig. 1 ist eine Fahrzeuganordnung schematisch mit Blickrichtung in Fahrzeuglängsachse skizziert, wobei ein Warenträger WT in der linken Bildhälfte in Transportrichtung innerhalb des Laderaums LR des Fahrzeugs angeordnet und in der rechten Bildhälfte ein gleichartiger Warenträger in einer Entladeposition auf die Standfläche SF, auf welcher auch das Fahrzeug steht, abgesenkt ist. Das Fahrzeug sei schematisch repräsentiert durch den Laderaum LR, eine Längsträgeranordnung LT des Fahrzeugrahmens und die Hinterräder HR. Wesentlich an den Positionen nach Fig. 1 ist, dass der Warenträger in horizontaler seitlicher Richtung x in der Transportposition die Längsträgeranordnung LT des Fahrzeugrahmens, welche zwei seitlich beabstandete Längsträger enthält, teilweise überdeckt und in der Entladeposition teilweise innerhalb der Laderaumbreite LB liegt. Das seitliche Überdeckungsmaß MT von Warenträger WT und Längsträgeranordnung LT in der Transportposition beträgt vorteilhafterweise wenigstens MT=25 cm. Der Warenträger liegt in der Entladeposition mit einem Maß ME innerhalb der Laderaumbreite LB, welches vorteilhafterweise wenigstens ME=40 cm beträgt. Günstigerweise beträgt das Maß ME wenigstens ein Drittel, vorzugsweise wenigstens die Hälfte der Abmessung TL des Warenträgers in x-Richtung.

Der Warenträger enthält vorteilhafterweise einen Boden BO und eine Rahmenkonstruktion RT, welche eine Einhängeeinrichtung EI, beispielsweise einen Bolzen oder eine Buchse, einen Haken usw. zum Einhängen des Warenträgers in eine in Fig. 1 der Übersichtlichkeit halber nicht mit eingezeichnete, mit dem Fahrzeug verbundene, insbesondere am Fahrzeugrahmen abgestützte Verschiebevorrichtung aufweist, mittels welcher die Verlagerung des Warenträgers zwischen der Transportposition und der Entladeposition erfolgt. Der Warenträger, insbesondere dessen Boden BO weist in x-Richtung vorteilhafterweise eine Länge TL von mindestens 120 cm auf, um eine Standardpalette mit Maßen 120 cm x 80 cm aufzunehmen oder selbst für Waren, insbesondere Stapelkästen, eine äquivalente Ladelänge in x-Richtung zu bieten. Die Länge TL des Warenträgers beträgt vorteilhafterweise wenigstens 40 %, insbesondere wenigstens 45 % der Laderaumbreite LB. Senkrecht zur Zeichenrichtung in Längsrichtung des Fahrzeug weist der Warenträger vorteilhafterweise ein Maß von ungefähr einer Palettenbreite (80 cm) oder vorzugsweise einem ganzzahligen Vielfachen davon auf. Der Warenträger liegt in Fahrzeuglängsrichtung zwischen den Hinterrädern und der Vorderwand des Laderaums. Der Laderaum ist typischerweise nach oben geschlossen, kann aber auch offen sein. Der Boden BO des Warenträgers kann in gewichtsparender Weise eine Gitterkonstruktion aufweisen. Der Rahmen RT gewährleistet, gegebenenfalls in Verbindung mit korrespondierender Führungseinrichtung von Warenträger und Fahrzeug, insbesondere der Verschiebevorrichtung die aufrechte Ausrichtung des Warenträgers mit im wesentlichen horizontalem Boden BO auch während der Verlagerung zwischen Transportposition und Entladeposition. Eine seitliche anlegbare oder umkippbare Keilrampe kann für eine Niveauüberbrückung zur Entladung mittels einer Transportkarre vorgesehen sein. Der Warenträger kann einseitig oder mehrseitig teilweise oder vollständig zu einem Käfig geschlossen sein, welcher insbesondere die Funktion einer Transportgutsicherung übernehmen kann.

In Fig. 1 ist in der Transportposition der Boden BO in etwa auf dem Niveau konventioneller Pritschen-LKW in einer Höhe von ca. 120 cm. Da der Warenträger in Längsrichtung vor den Hinterrädern liegt, kann die Höhe des Bodens BO in der Transportposition aber auch in Richtung der Oberkante des Fahrzeugrahmens, insbesondere der Längsträgeranordnung oder gegebenenfalls auf diesen befestigten Querträgern abgesenkt sein.

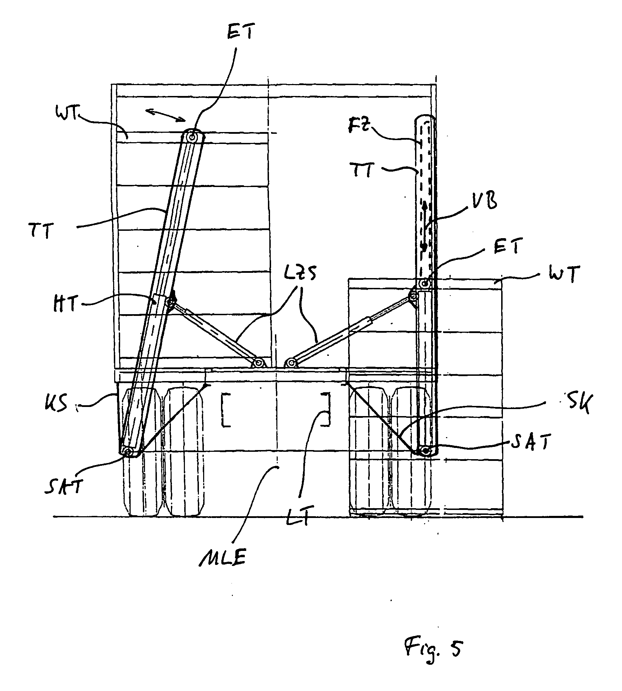

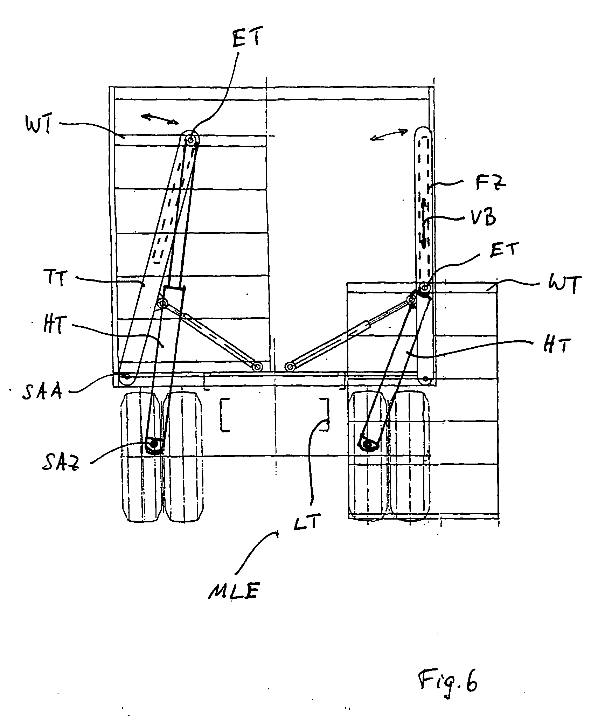

Die Verlagerung des Warenträgers zwischen der Transportposition und der Entladeposition kann auf unterschiedliche Weisen erfolgen. Insbesondere kann die Verlagerung auch vollständig als eine Schwenkbewegung unter Einsatz einer Schwenkhebelanordnung nach Art der DE 298 07 108 U1 oder mittels einer Kranlaufkatze auf seitlich ausfahrbaren Schienen nach Art der EP 0983899 B1 erfolgen. Eine reine Schwenkbewegung ist in der rechten Hälfte von Fig. 1 durch einen Bewegungskreis SK des Zentrums SZ der Seitenfläche des Warenträgers angedeutet. Vorzugsweise ist aber die Verlagerung zwischen der Transportposition und der Entladeposition auf zwei unterschiedlichen Kraftübertragungsmitteln zugeordnete Teilbewegungen aufgeteilt, welche vorteilhafterweise zeitlich nacheinander ablaufen können. Ein solcher Bewegungsablauf mit einer Zwischenposition ZP einer Einhängung EI des Rahmens RT ist in Fig. 2 für eine Fahrzeughälfte in Form einer im wesentlichen seitlichen Verschiebung, insbesondere einer Schwenkbewegung SB zwischen der Transportposition TP und der Zwischenposition und einer im wesentlichen Vertikalbewegung VB zwischen der Entladeposition EP und der Zwischenposition ZP skizziert.

Dabei ist die Höhenverschiebung als Vertikalverschiebung, vorzugsweise zumindest überwiegend als Linearverschiebung durch erste Kraftübertragungsmittel bewerkstelligt. Solche erste Kraftübertragungsmittel können in einer ersten vorteilhaften Ausführungsform Zugelemente, insbesondere Seile oder Ketten enthalten, welche insbesondere auch mehrfach umgelenkt sein können. Als Kraftquelle können hierbei insbesondere Elektromotoren Ideen, welche vorzugsweise über selbsthemmende Getriebeelemente mit den Zugelementen gekoppelt sind.

In anderer, bevorzugter Ausführungsform können die ersten Kraftübertragungsmittel druckmittelbetätigbare Bauelemente, insbesondere pneumatische oder vorzugsweise hydraulische Linearzylinder enthalten, welche aus bei Transportfahrzeugen typischerweise bereits vorhandenen Druckmittelquellen gespeist werden können.

Die seitliche Verschiebung der Verlagerung zwischen Transportposition und Entladeposition erfolgt vorteilhafterweise zumindest überwiegend unter Einwirkung zweiter Kraftmittel und ist in bevorzugter Ausführung als Schwenkbewegung einer Schwenkhebelanordnung um eine horizontale Schwenkgelenkachse ausgeführt. Die auf die Schwenkhebelanordnung wirkenden zweiten Kraftübertragungsmittel können, z. B. mittels eines hydraulischen Schwenkmotors, direkt auf die Schwenkwelle wirken. Bevorzugt ist der Kraftangriffspunkt ab der zweiten Kraftübertragungsmittel an der Schwenkhebelanordnung aber von der Schwenkgelenkachse beabstandet. Die zweiten Kraftübertragungsmittel können insbesondere Zugelemente wie Seile oder Ketten, in anderer vorteilhafter Ausführungsform starre, auf Zug und Druck beanspruchbare Bauelemente mit Zahnungs- oder Gewindeeingriff, wie z. B. Zahnstangen oder Gewindespindeln oder ―hülsen, in bevorzugter Ausführung lineare druckmittelbetätigbare Bauelemente sein.

Der Verlauf der Schwenkbewegung SB liegt vorteilhafterweise in seitlicher Richtung (x) überwiegend oder vollständig auf der der Mittellängsebene MLE des dem Fahrzeug zugewandten Seite der x-Position der Schwenkachse, welche in Fig. 2 mit PS angenommen sei. Der Schwenkwinkel der Schwenkbewegung SB um die Schwenkachse PS beträgt vorteilhafterweise weniger als 45°, vorzugsweise weniger als 30°. Der Abstand der Einhängung EI des Warenträgers von der Schwenkachse bei der Schwenkbewegung, in Fig. 2 als Schwenkradius RS eingetragen ist vorteilhafterweise größer als die halbe Laderaumbreite, RS > LB/2.

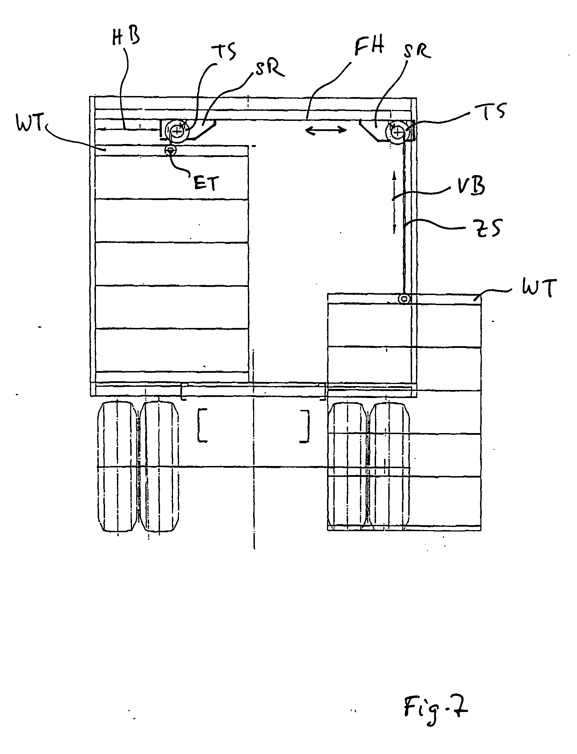

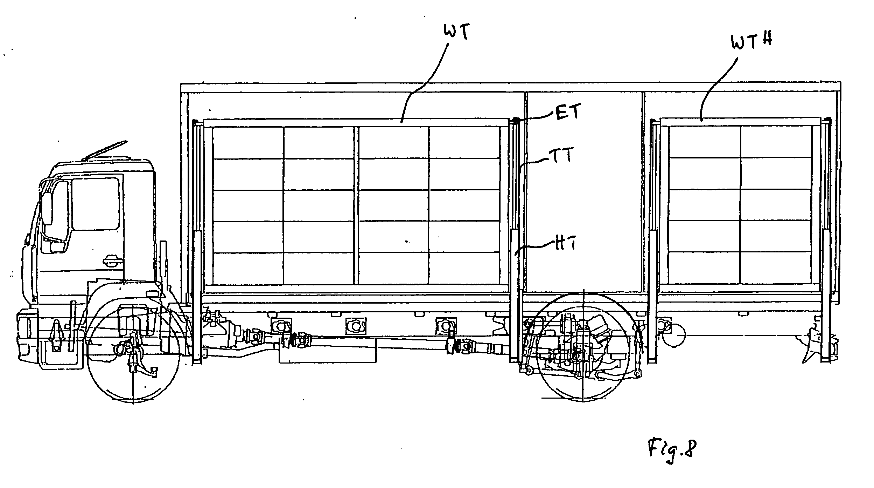

Fig. 3 zeigt ein bevorzugtes Ausführungsbeispiel mit einem hydraulischen Linearzylinder LZV als erstem Kraftübertragungsmittel, welcher in der mit durchgezogener Linie gezeichneten Position mit einer Zylinderachse ZAV vertikal ausgerichtet ist. Der Linearzylinder ist an seinem unteren Ende an dem Fahrzeugrahmen, z. B. über einen Querträger QT stabil abgestützt und um eine horizontale, in Längsrichtung des Fahrzeugs weisende Schwenkachse SA schwenkbar gelagert. Am oberen Ende des teleskopierbaren Stempels des Linearzylinders ist eine Einhängeeinrichtung ET für die Aufnahme des Warenträgers vorbereitet. Typischerweise kann das Gewicht des Warenträgers, insbesondere bei Beladung, ausreichen, um den bei angehobenem Warenträger ausgefahrenen Stempel allein unter Schwerkrafteinfluss in den Zylinder einzudrücken, wenn ein Auslaufventil des Zylinders geöffnet wird, so dass ein einfach wirkender Zylinder mit unter Einfluss eines unter hohem Druck zugeführten Druckmittels ausfahrendem Stempel ausreicht. Es kann aber auch ein doppelt wirkender Zylinder eingesetzt sein. Der Linearzylinder ist im skizzierten Beispiel im ausgefahrenen Zustand mittels eines weiteren druckmittelbetätigbaren Zylinders LZS, welcher einerseits über den Querträger oder direkt am Fahrzeugrahmen und andererseits von der Schwenkgelenkachse SA beabstandet am erstgenannten Linearzylinder LZV abgestützt ist, um die Schwenkgelenkachse SA zwischen der mit durchgezogener Linie eingezeichneten aufrechten Stellung, in welcher eine Höhenverschiebung des Warenträgers möglich ist, und einer mit unterbrochener Linie angedeuteten Transportstellung, in welcher der Warenträger sich in der Transportposition befindet und vorzugsweise auf dem Fahrzeugrahmen abgestützt und vorteilhafterweise arretiert ist, verschwenkbar. Der weitere Linearzylinder ist vorteilhafterweise ein doppelt wirkender Zylinder. Die Schwenkbewegung kann in beiden Schwenkrichtungen vorteilhaft durch mechanischen Anschlag begrenzt sein.

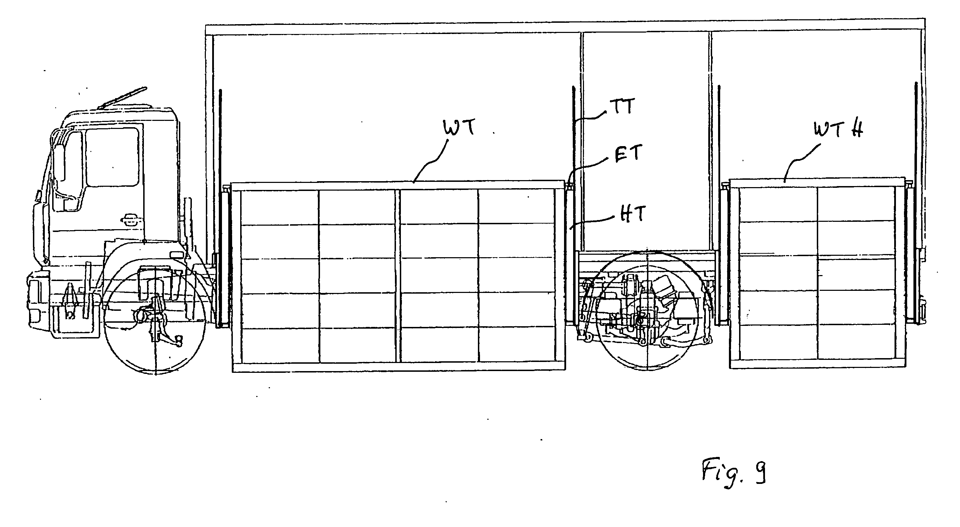

In dem in Fig. 4 skizzierten Beispiel ist ein Schwenkhebel SH in einem am Fahrzeugrahmen abgestützten Schwenkgelenk um eine Schwenkgelenkachse HA schwenkbar gelagert. Zur Schwenkung des Schwenkhebels zwischen der mit durchgezogener Linie eingezeichneten Entladestellung, in welcher eine Höhenverstellung des Warenträgers möglich ist, und einer mit unterbrochener Linie eingezeichneten Transportstellung des Schwenkhebels ist in diesem Beispiel am oberen Ende des Schwenkhebels, welcher vorzugsweise bis in die Nähe des Dachbereichs des Laderaums verlängert ist, eine Gewindespindel GS oder eine Zahnstange schwenkbar befestigt, welche in einer motorisch drehbaren, am Fahrzeugaufbau angelenkten Gewindehülse GH geführt ist. Durch Drehung der Gewindehülse in der einen oder anderen Drehrichtung kann der Schwenkhebel zwischen der mit durchgezogener Linie und der mit unterbrochener Linie gezeichneten Stellung verschwenkt werden. Zur Vertikalverschiebung des Warenträgers in der mit durchgezogener Linie gezeichneten Entladestellung des Schwenkhebels kann der Warenträger z. B. mittels eines Haltebolzens an einem Zugelement, z. B. Seil SL, insbesondere einem Stahlseil, als erstem Kraftübertragungsmittel, gehalten sein, welches über eine obere Umlenkrolle SRO und eine untere Umlenkrolle SRU, welche vorzugsweise koaxial zur Schwenkgelenkachse HA angeordnet ist, zu einer Seiltrommel ST umgelenkt ist, welche motorisch antreibbar ist. Das Seil kann vorteilhafterweise auch durch eine weitere Umlenkrolle RT an der Einhängung des Warenträgers eine wie skizziert einfache Flaschenzuganordnung mit Befestigung des Seilendes am Schwenkhebel SH oder auch eine mehrzügige Flaschenanordnung bilden. Zur definierten Absenkung des Warenträgers ist ein motorischer Antrieb mit der Seiltrommel vorteilhafterweise über selbsthemmende Getriebeelemente gekoppelt. In der Schwenkhebelanordnung kann eine Vertikalführung VF für den Haltebolzen oder eine andere Führungseinrichtung auf Seiten des Warenträgers vorgesehen sein. Weitere Führungsmittel können eine aufrechte Position des Warenträgers mit horizontal verlaufendem Boden auch bei ungleicher Beladung des Warenträgers sicherstellen. Im skizzierten Beispiel liegt der Angriffspunkt der Gewichtskraft des Warenträgers mit der Umlenkrolle RT in der mit durchgezogener Linie eingezeichneten Entladestellung des Schwenkhebels SH seitlich geringfügig gegen den vertikal über der Schwenkgelenkachse liegenden Scheitelpunkt der Schwenkbewegung nach außen versetzt. Zusätzlich zu der Lagesicherung des Schwenkhebels SH in der Entladestellung durch die Gewindespindel/-hülse-Anordnung als zweite Kraftübertragungsmittel kann der Schwenkhebel auf dem Fahrzeugrahmen gegen eine weitere Verschwenkung nach außen gesichert sein. Das abzustützende Drehmoment um die Schwenkgelenkachse HA ist aber aufgrund des kleinen seitlichen Versatzes der Führung VF gegen die Achse HA gering.

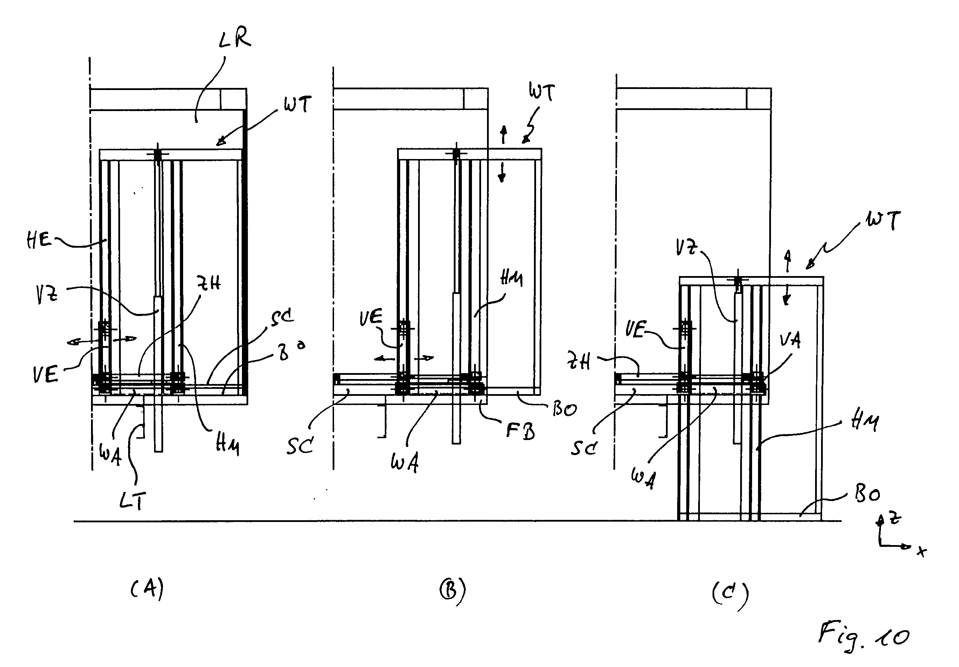

Bei einer in Fig. 5 in zu Fig. 1 analoger Ansicht skizzierten Fahrzeuganordnung enthält die Verschiebevorrichtung einen um eine Schwenkachse SAT schwenkbaren, gegen den Fahrzeugrahmen direkt oder über eine Tragkonstruktion abgestützten Tragarm TT sowie einen hydraulischen Linear-Hubzylinder HT. An dem Schwenkarm greift seitlich ein weiterer hydraulischer Linearzylinder LZS analog zu Fig. 3 an, mittels dessen die Schwenkbewegung des Tragarms TT bewerkstelligt wird. Der Hubzylinder HT ist an seinem unteren Teil an dem Tragarm, am Fahrzeugrahmen oder einer mit diesem verbundenen Tragkonstruktion SK abgestützt. Das obere Ende des Stempels des Hubzylinders HT mit der Einhängeeinrichtung ET für den Warenträger WT ist vorteilhafterweise in einer Führung FZ des Tragarms verschiebbar geführt. Auf dem Hubzylinder wirkt dadurch bei der Verschwenkung kein Biegemoment, so dass eine kostengünstige und leichte Ausführung für den Hubzylinder gewählt werden kann. Das mittels einer Tragkonstruktion tiefer, insbesondere unterhalb der Oberkante vorzugsweise unterhalb der Unterkante der Längsträgeranordnung LT des Fahrgestells des Fahrzeugs, gelegte Vertikalposition des unteren Endes des Hubzylinders HT, welches vorzugsweise auch die Schwenkachse umfasst, erlaubt die Verwendung eines nur einfach teleskopierbaren Hubzylinders für das gesamte Maß der Vertikalverschiebung VB des Warenträgers in die bzw. aus der in der rechten Bildhälfte skizzierten Entladeposition. Der Tragarm TT und der Hubzylinder HT können auch um unterschiedliche Schwenkachsen SAZ, SAA schwenkbar sein. Der Hubzylinder kann in der Entladeposition auch gegen die Vertikale geneigt sein. Die Führung im Tragarm bestimmt dann die Vertikalbewegung, wie in Fig. 6 skizziert.

Die Aufteilung der Verlagerungsbewegung in eine zumindest überwiegend die Höhenverschiebung des Warenträgers bildende, im wesentlichen vertikale Verschiebung und eine im wesentlichen, zumindest überwiegend den seitlichen Versatz bewirkende Schwenkbewegung über eine vorteilhafterweise am Fahrzeugrahmen abgestützte Schwenkhebelanordnung, welche aber nur eine gegenüber der gesamten Höhenverschiebung des Warenträgers geringe Höhenveränderung umfasst, ist auch für eine Verlagerung des Warenträgers in eine Entladeposition vollständig außerhalb der Laderaumbreite von Vorteil.

Fig. 7 zeigt in einer zu Fig. 1 analogen Ansicht eine Fahrzeuganordnung, bei welcher ein Warenträger an einem flexiblen Zugmittel, beispielsweise einem Seil ZS eingehängt ist, welches Teil einer Hubvorrichtung ist. Die Hubvorrichtung, welche z. B. eine motorisch angetriebene Seiltrommel TS in einem Tragrahmen SR enthält, ist unter dem Dach eines Fahrzeugaufbaus in Führungen horizontal verfahrbar, was durch den mit HB bezeichneten Pfeil in Fig. 7 angedeutet ist. Geeignete Vorrichtungen sind an sich aus dem Stand der Technik bekannt. In der in der linken Hälfte der Fig. 7 skizzierten Transportposition des Warenträgers liegt die Hubvorrichtung näher an der vertikalen Mittellängsebene ME der Fahrzeuganordnung als in der in der rechten Hälfte der Fig. 7 skizzierten Endladeposition. Durch die seitliche Lage des Warenträgers überwiegend innerhalb der Breite des Laderaums kann vorteilhafterweise auch die horizontal verschiebbare Hubvorrichtung innerhalb der Laderaumbreite liegen, so dass die Horizontalführungen für die Hubvorrichtungen nicht seitlich über die Laderaumbreite hinaus verlängert werden müssen. Die Vertikalbewegung des Warenträgers in bzw. aus der Entladeposition ist mit VB bezeichnet.

Auch in der Transportposition kann vorteilhafterweise eine geringe vertikale Verschiebbarkeit des Warenträgers gegeben sein, um diesen z. B. in Arretiereinrichtungen einzusetzen und/oder das Zugseil in der Transportposition zu entlasten.

In Fig. 8 und Fig. 9 ist ein Fahrzeug in Seitenansicht skizziert, wobei sich der Warenträger WT zwischen der Hinterradanordnung und dem vorderen Ende des Laderaums in Fig. 8 in der Transportposition und in Fig. 9 in der Entladeposition befindet. Für die Verschiebevorrichtung sei eine Ausführung der in Fig. 5 skizzierten Art mit je einem Tragarm und Hubzylinder am vorderen und am hinteren Ende des Warenträgers angenommen. Im hinter der Hinterradanordnung liegenden Abschnitt des Laderaums kann ein weiterer, in gleicher Weise über eine separate Verschiebevorrichtung verlagerbarer Warenträger WTH vorgesehen sein. Der hintere Abschnitt kann aber auch in gebräuchlicher Weise über eine heckseitige absenkbare Ladebordwand be- bzw. entladen werden.

Eine in Fig. 10 in verschiedenen Positionen mit Blickrichtung in Fahrzeuglängsrichtung skizzierte Anordnung zeigt wie in vorangegangenen Beispielen einen rahmenförmigen Warenträger WT. Dieser ist mit einem Wagen WA verbunden, welcher horizontal quer zur Fahrzeuglängsrichtung, d. h. in x-Richtung des eingeführten Koordinatensystems in einer fest mit dem Fahrzeug verbundenen Schiene SC verfahrbar ist. Die Verfahrung in x-Richtung erfolgt im skizzierten Beispiel über einen Hydraulikzylinder ZH, welcher mit einem Ende fest mit dem Fahrzeugaufbau und mit dem anderen Ende mit dem Wagen verbunden ist. Der Hydraulikzylinder ZH ist doppelwirkend, so dass mit ihm sowohl die Verschiebung aus der in Fig. 10 (A) skizzierten Transportposition des Warenträgers in die in Fig. 10 (B) über den Laderaum hinaus verschobenen Position des Ladeträgers als auch umgekehrt erfolgen kann. Wagen und Schiene können beispielsweise eine Rollenführung bilden. Die Elemente von Wagen und Schiene können wechselseitig vertauschbar sein. Im skizzierten Beispiel erstreckt sich die Schiene SC im wesentlichen bis zum seitlichen Rand des Laderahmens des Fahrzeugs. Derartige Linearführungen sind, z.B. als Rollenauszüge, an sich bekannt. Der Verschiebeweg in x-Richtung beträgt vorteilhafterweise weniger als die Hälfte der Erstreckung des Warenträgers in x-Richtung oder weniger als ein Viertel der Breite des Laderaums. Der geringe Verschiebeweg ermöglicht vorteilhafterweise eine zuverlässige Abstützung des Wagens in der Schiene ohne aufwendige teleskopierbare Ausführung der Linearführung von Wagen und Schiene.

Ein Hydraulikzylinder VZ ist an dem Wagen WA aufgehängt und mit diesem in x-Richtung verschoben. Mittels des Hydraulikzylinders VZ ist der rahmenförmige Warenträger WT relativ zu dem Wagen WA vertikal, d. h. in z-Richtung verschiebbar. Der Hydraulikzylinder VZ kann dabei vorteilhafter Weise in besonders einfacher Ausführung lediglich eine anhebende Kraft auf den Warenträger WT relativ zum Wagen WA zur Anhebung des Warenträgers WT aus der in Fig. 10 (C) skizzierten abgesetzten Entladeposition in die angehobene, seitlich nach außen verschobene Position nach Fig. 10 (B) ausüben. Ein Absenken des Warenträgers WT aus der Position nach Fig. 10 (B) in die Position nach Fig. 10 (C) kann allein unter dem Gewicht des beladenen oder unbeladenen Warenträgers WT durch Ablassen von Druckmittel aus dem Hydraulikzylinder VZ erfolgen. Der Hydraulikzylinder VZ greift mit seinem oberen Ende vorteilhafterweise in einem oberen Bereich des rahmenförmigen Warenträgers WT an. Der Warenträger WT kann auch anders als in der Skizze gestaltet sein, und das obere Ende des Stempels des Hydraulikzylinders VZ kann z.B. auch über flexible Zugelemente wie Seile oder Ketten anstelle von starren Rahmenelementen mit dem Warenträger WT verbunden sein.

Der Warenträger WT ist vorteilhafterweise über eine vertikale Linearführung relativ zum Fahrzeug bzw. relativ zum horizontal verschiebbaren Wagen WA in seiner Ausrichtung stabilisiert. Die vertikale Linearführung kann insbesondere einen vertikalen Schenkel VE des Wagens WA mit vertikal beabstandeten Führungselementen, welche in ein Profil auf Seiten des Warenträgers WT eingreifen, enthalten. Im skizzierten Beispiel ist zusätzlich eine Führung durch ein weiteres, seitlich weiter außen liegendes Führungselement VA des Wagens WA, welches in ein Führungsprofil HM auf Seiten des Warenträgers WT eingreift, gegeben.

Der Hydraulikzylinder VZ ragt nach unten über den Boden BO des Warenträgers hinaus und liegt in x-Richtung seitlich außerhalb des von den Längsträgern LT des Fahrzeugchassis beanspruchten Raums. Das Hinausragen des Hydraulikzylinders VZ nach unten über den Boden BO des Warenträgers hinaus ermöglicht die Ausführung des Hydraulikzylinders VZ mit einfachem, d. h. nicht teleskopierbarem Stempel, was sowohl hinsichtlich des Platzbedarfs als auch der Kosten und Wartungsfreundlichkeit des Hydraulikzylinders VZ von Vorteil ist und die Verschiebehöhe des Warenträgers zwischen den Positionen nach Fig. 10 (B) und Fig. 10 (C) durch einfaches Aus- bzw. Einfahren des Zylinderstempels ermöglicht.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar. Insbesondere sind für die Verschiebevorrichtung die beispielhaft angegebenen Merkmale in anderer Kombination und in Kombination mit anderen, dem Fachmann an sich geläufigen Merkmalen realisierbar.

## Patentansprüche

1. Fahrzeuganordnung mit einem Laderaum mit wenigstens einem Warenträger, welcher mittels einer maschinenkraftbetätigten Verschiebevorrichtung zwischen einer tieferen Ladeposition und einer höheren Transportposition verlagerbar ist, wobei in der Transportposition der Boden des Warenträgers vollständig innerhalb der Laderaumbreite und dabei teilweise über einer Längsträgeranordnung des Fahrzeugrahmens liegt und in der Ladeposition der Warenträger seitlich gegen seine Transportposition versetzt ist, **dadurch gekennzeichnet, dass** der Warenträger in der Ladeposition teilweise innerhalb der Laderaumbreite liegt und/oder dass die Verschiebevorrichtung bei der Verschiebung zwischen Ladeposition und Transportposition die Höhenverschiebung zumindest überwiegend als eine Linearverschiebung mittels erster Kraftmittel und die seitliche Verschiebung zumindest überwiegend als eine Schwenkbewegung einer Schwenkhebelanordnung mittels zweiter Kraftmittel ausführt.

2. Anordnung nach Anspruch 1, **dadurch gekennzeichnet, dass** der Boden des Warenträgers in der Transportposition die Längsträgeranordnung seitlich über wenigstens 25 cm überdeckt.

3. Anordnung nach Anspruch 1 oder 2, **dadurch gekennzeichnet, dass** der Warenträger zu der Ladeposition wenigstens 40 cm innerhalb der Laderaumbreite liegt.

4. Anordnung nach einem der Ansprüche 1 bis 3, **dadurch gekennzeichnet, dass** der Boden des Warenträgers in der Transportposition tiefer liegt als der Scheitel der Räder der Fahrzeughinterachse.

5. Anordnung nach einem der Ansprüche 1 bis 5, **dadurch gekennzeichnet, dass** die Breite des Bodens des Warenträgers wenigstens 40 %, insbesondere wenigstens 45 % der Laderaumbreite beträgt.

6. Anordnung nach einem der Ansprüche 1 bis 5, **dadurch gekennzeichnet, dass** die ersten Kraftmittel flexible Zugelemente enthalten.

7. Anordnung nach einem der Ansprüche 1 bis 6, **dadurch gekennzeichnet, dass** die ersten Kraftmittel druckmittelbetätigbare Aktuatoren enthalten.

8. Anordnung nach Anspruch 7, **dadurch gekennzeichnet, dass** als Aktuatoren Linearzylinder eingesetzt sind.

9. Anordnung nach einem der Ansprüche 1 bis 8, **dadurch gekennzeichnet, dass** die zweiten Kraftmittel druckmittelbetätigbare Aktuatoren enthalten.

10. Anordnung nach Anspruch 9, **dadurch gekennzeichnet, dass** die Aktuatoren Linearzylinder sind.

11. Anordnung nach einem der Ansprüche 1 bis 8, **dadurch gekennzeichnet, dass** die zweiten Kraftmittel starre Kraftübertragungselemente mit Gewinde- oder Zahnungs-Eingriff enthalten.

12. Anordnung nach einem der Ansprüche 1 bis 11, **dadurch gekennzeichnet, dass** die zweiten Kraftmittel flexible Zugelemente enthalten.

13. Anordnung nach einem der Ansprüche 10 bis 12, **dadurch gekennzeichnet, dass** die zweiten Kraftmittel an der Schwenkhebelanordnung von der Schwenkgelenkachse beabstandet angeordnet sind.

14. Anordnung nach einem der Ansprüche 1 bis 13, **dadurch gekennzeichnet, dass** die Schwenkhebelanordnung an mit dem Fahrzeugrahmen verbundenen Querträgeranordnungen abgestützt ist.

15. Anordnung nach einem der Ansprüche 1 bis 14, **dadurch gekennzeichnet, dass** die Einhängung des Warenträgers an der Schwenkhebelanordnung in der Transportposition seitlich gegen die Schwenkachse zur Fahrzeugmitte hin versetzt ist.

16. Anordnung nach einem der Ansprüche 1 bis 15, **dadurch gekennzeichnet, dass** der Verschwenkungsweg (SB) der Einhängung (EI) des Warenträgers an der Schwenkhebelanordnung zu wenigstens 30 %, vorzugsweise wenigstens 50 %, insbesondere zu wenigstens 80 % auf der der Fahrzeugmitte zugewandten Seite der Schwenkachse der Schwenkbewegung liegt.

17. Anordnung nach einem der Ansprüche 1 bis 16, **dadurch gekennzeichnet, dass** der Abstand der Einhängung des Warenträgers an der Schwenkhebelanordnung von der Schwenkgelenkachse wenigstens gleich der halben Laderaumbreite ist.

18. Anordnung nach einem der Ansprüche 1 bis 17, **dadurch gekennzeichnet, dass** bei der Verlagerung des Warenträgers zwischen der Transportposition und der Ladeposition eine Schwenkbewegung (SB) und eine lineare Höhenverstellung (VB) zeitlich nacheinander erfolgen.

19. Anordnung nach einem der Ansprüche 1 bis 18, **dadurch gekennzeichnet, dass** Führungseinrichtungen vorgesehen sind, welche die aufrechte Ausrichtung des Warenträgers in Zwischenpositionen zwischen Transportposition und Ladeposition sichern.
